# EUROPEAN PATENT SPECIFICATION

(11) **EP 4 311 958 B1**
(45) Date of publication and mention of the grant of the patent: **03.09.2025**
(21) Application number: 23186048.7
(22) Date of filing: 18.07.2023
(51) Int. Cl.: F16J 15/34

(54) **MECHANICAL SEAL**
GLEITRINGDICHTUNG
JOINT MÉCANIQUE

(30) Priority: 27.07.2022 IT 202200015915
(43) Date of publication of application: 31.01.2024
(73) Proprietor: Fluiten Italia S.p.A., 20154 Milano (IT)
(72) Inventor: COLOMBO, Alberto Delfo, deceased (IT); ZUCCON, Luca, 20831 SEREGNO (MONZA BRIANZA) (IT); ABBRUZZINO, Vincenzo Antonio, 20017 RHO (MILANO) (IT)
(74) Representative: Inchingalo, Simona

(56) References cited:
- EP-A1- 0 371 587
- WO-A1-2023/147938
- WO-A1-89/08782
- DD-A1- 216 772
- JP-U- S5 368 866

## Description

The present invention relates to a mechanical seal.

Mechanical seals are devices that can be applied to rotating shafts to prevent fluid leakage and can withstand high pressure and mechanical stress.

Mechanical seals are used, for example, in centrifugal pumps and in motor boats in which a shaft transmits rotational motion from an engine, located inside a boat, to a propeller, which is completely submerged in water, to prevent liquid from entering the boat through the shaft.

Nowadays, a mechanical seal is realised by a pair of annular bodies, one stationary and one rotating sealing body, placed around a drive shaft and in relative motion with respect to each other when the drive shaft is driven; the two annular bodies are coaxial and coupled frontally so that a circular crown face of one is in contact with that of the adjacent annular body.

The rotating annular body is kept in contact with the stationary one by elastic means that push it axially against the stationary body. Preferably, such elastic means consist of a wave spring with a substantially annular profile.

During rotation, a minimal amount of fluid, sufficient to lubricate and prevent overheating, seeps through the two annular bodies without, however, escaping into the environment to be insulated.

With particular reference to the rotating part, it generally comprises a sealing element, presenting the sealing surface, and an annular body integrally connectable to a rotating shaft in such a way as to ensure a seal thereon.

In order to allow for mutual flotation of the sealing element and the annular body, they are coupled with clearance along the rotation axis of the shaft, so that they are free to make a limited and controlled translation in the axial direction. The wave spring, having a substantially annular profile, is placed between the sealing element and the annular body to absorb such axial movements and maintain mutual pressure between the coupling surfaces.

In order to enable the transfer of rotational motion from the annular body to the sealing element, it is known to make a shape coupling between the two. In particular, two teeth are made on the annular body at the level of the annular head surface and away from it. These teeth have an axial extension equal to the axial extension of the sealing element and are diametrically opposed. Corresponding counter-seats for such teeth are formed on the sealing element in order to transfer rotational motion from the annular body to the sealing element by means of a rotational shape coupling between such teeth formed on the annular body and such counter-seats formed on the sealing element.

Disadvantageously, the teeth have a large extension, so this solution is excessively costly due to the process of obtaining these teeth on the annular body, which are in fact obtained by removal of material, generating considerable waste of the material removed, and therefore considerable costs.

Even more disadvantageously, these teeth, being subject to considerable mechanical stress, must undergo a process of ion nitriding or hardening in order to make them stronger. Unfortunately, this process is expensive and, together with the costs related to the manufacturing process by material removal, results in an uneconomical product.

In order to obviate the costs of the material removal procedure for obtaining teeth at the level of the annular body, it is known to transfer the rotational motion from the annular body to the sealing element by means of the elastic means between them, as described in EP3643950A1 and in EP 0 371 587. In particular, such elastic means comprise a wave spring, interposed between the annular body and the sealing element, having a substantially annular profile and presenting a plurality of teeth, one for each wave of the spring, diametrically opposed and extending on the surface in which the spring itself lies, alternating teeth projecting inwards and outwards from the annular profile defined by the spring. In EP3643950A1 there are two and diametrically opposite teeth protruding inwards and two and diametrically opposite teeth protruding outwards.

In more detail, the teeth protruding inwards from the annular profile defined by the spring are configured to engage respective radially through recesses made in the annular body, while the teeth protruding outwards from the annular profile defined by the spring are configured to engage respective recesses made in the sealing element.

Disadvantageously, the creation of recesses radially passing through the side wall of the annular body requires the removal of material, which, although limited, generates production costs, imposes a high overall size of the mechanical seal, and requires the presence of teeth protruding towards the inside of the annular profile defined by the spring, which can be dangerous during assembly/disassembly.

In addition, during assembly of the seal, the annular body and the sealing element can become axially detached, creating problems and forcing the assembly actions to be repeated several times before the correct configuration is achieved.

Furthermore, disadvantageously, the teeth protruding towards the outside of the annular profile defined by the spring rest in the respective recesses made in the sealing element, thus generating a distribution of the forces generated by the wave spring that is not uniform, but rather concentrated in the limited support areas. In addition to the above, the inner and outer teeth of the wave spring have sharp edges, which can disadvantageously cause potential injuries during assembly and disassembly of the mechanical seal.

Finally, known mechanical seals are generally made of AISI 316 steel, which is particularly resistant to corrosion. In this case, the stationary body is generally made of silicon carbide and it is necessary to place an insert of sacrificial material, usually graphite, between the stationary and the rotating sealing body. However, this solution is not very environmentally friendly as the graphite insert must be sealed on a circular crown surface of the sealing element using a polluting agent. In addition, graphite, which is also a polluting agent, being porous, needs to be impregnated with antimony, a material that is toxic and polluting even though it withstands high temperatures. Even more disadvantageously, the rotating part, comprising a graphite insert sealed to it, requires a separation of the graphitic portion from the metal portion during disposal.

In this context, the technical task underlying the present invention is to propose a mechanical seal that overcomes at least some of the drawbacks of the prior art mentioned above.

In particular, it is the purpose of the present invention to provide a mechanical seal that ensures versatile and safe assembly for the operator. A further aim of the present invention is to propose a mechanical seal that can be realised through an economical production process and that minimises material waste.

The defined technical task and the specified aims are substantially achieved by a mechanical seal comprising the technical characteristics set forth in one or more of the appended claims.

In particular, the first shape coupling comprises at least one recess axially passing through the wave spring, preferably one recess for each wave defined by the wave spring, and at least one tooth, preferably one tooth for each wave defined by the wave spring, extending axially away from an annular head surface of the annular body. The tooth is configured to fit axially into the recess in order to rotationally constrain the wave spring to the annular body.

This makes it possible to limit the production costs and overall size of the mechanical seal, which is also safer due to the lack of radially projecting parts towards the rotation axis.

The dependent claims correspond to possible embodiments of the invention and are incorporated herein by reference.

Preferably, an axially-shaped coupling is provided configured to axially constrain the wave spring and the annular body in such a way as to prevent them from detaching from each other along the rotation axis. The axially-shaped coupling is configured to be reversibly activated upon relative rotation between the wave spring and the annular body.

In this way, the annular body and the sealing element are not only rotationally but also axially constrained, improving versatility when installing the seal.

Preferably, the sealing element has at least one outer recess, preferably one for each wave of the wave spring, and the wave spring has at least one outer tooth, preferably one for each wave of the wave spring, protruding away from the rotation axis and configured to engage the outer recess to define the second rotationally-shaped coupling. Even more preferably, the outer recess has a depth greater than the radial extension of the outer tooth so that an area of the wave spring adjacent to the outer tooth defines an extended support surface between the wave spring and the sealing element in the deformed condition of the wave spring itself. Therefore, the outer tooth is free to move within the outer recess, resulting in a uniform and extended distribution of the forces generated by the wave spring over a section of the wave spring itself. Preferably the annular body is made of AISI 316, while the sealing element when integral, i.e. without the graphite or silicon insert, is preferably made of chromium steel.

This makes it possible to realise an environmentally friendly mechanical seal that avoids the pollution caused by the use of the graphitic insert between the rotating part and the stationary body.

Further features and advantages of the present invention will become more apparent from the approximate and thus non-limiting description of a preferred, but non-exclusive, embodiment of a mechanical seal.

Such description will be set forth herein below with reference to the accompanying drawings, provided for merely indicative and therefore non-limiting purposes, wherein:
- figure 1 shows a sectional view in a radial plane of a first embodiment of a mechanical seal comprising a graphitic insert sealed onto the sealing element,
- figure 2 shows a cross-sectional view in a radial plane of a second embodiment of the mechanical seal, made entirely of metal material, preferably AISI 316 and chromium steel (Y1), without including a graphitic insert,
- figure 3 shows a sectional view in a radial plane of a rotating part of the mechanical seal in accordance with the first embodiment,
- figure 4A shows a front view of an annular body, which is included in the rotating part of the mechanical seal,

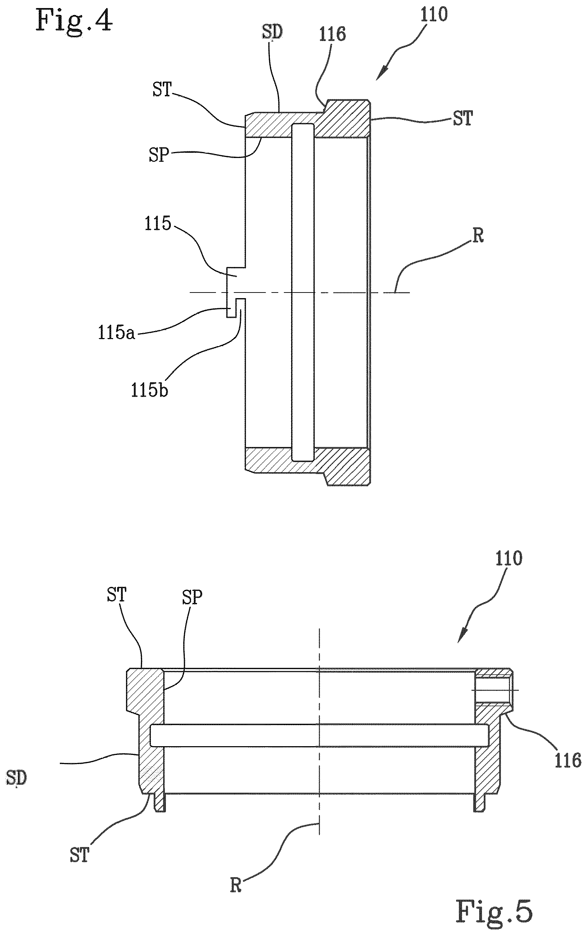

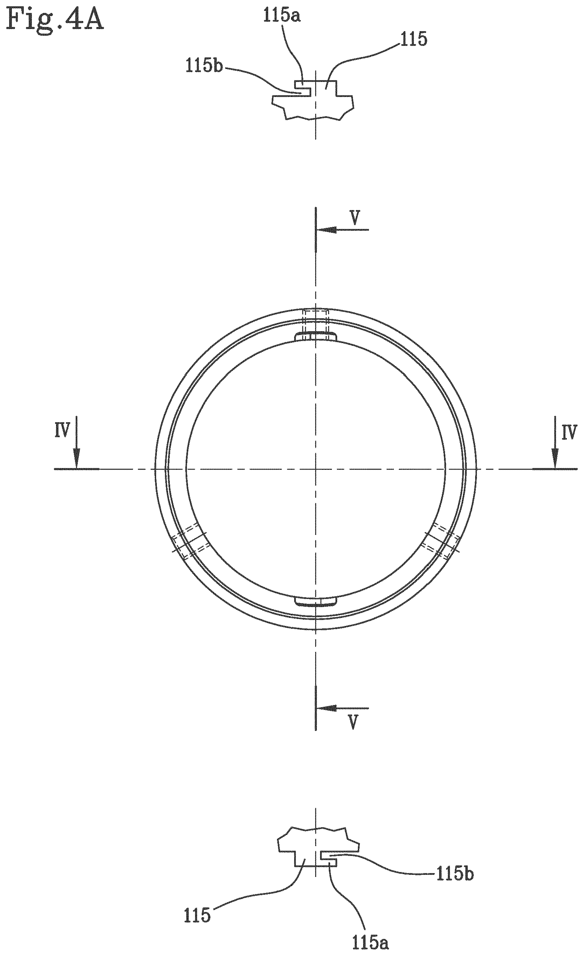

- figure 4 and figure 5 show a cross-sectional view according to tracks IV-IV and V-V of figure 4A, respectively,

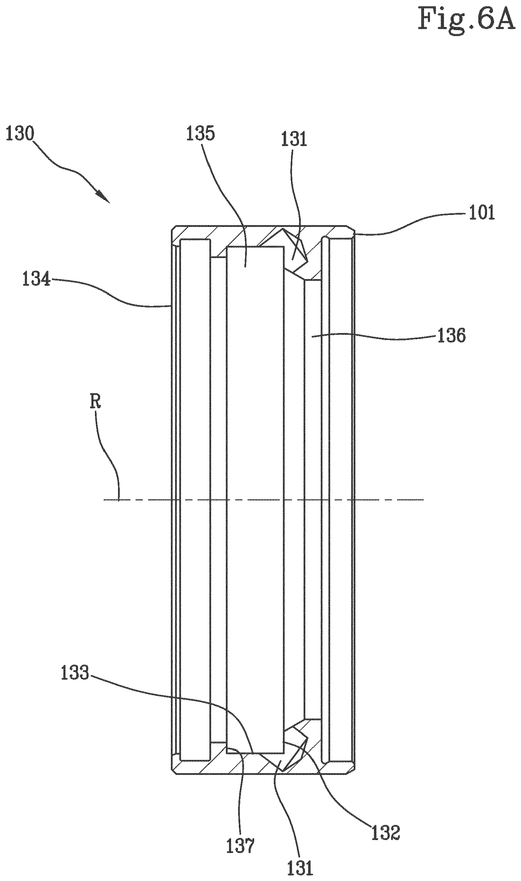

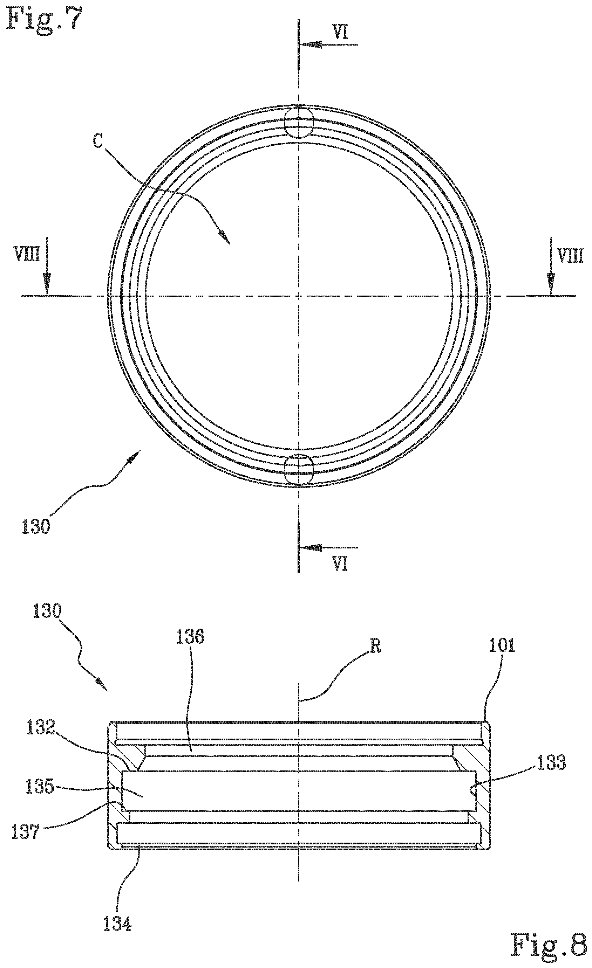

- figure 6A shows a cross-sectional view according to track VI-VI in figure 7 of a sealing element comprising a graphite insert and comprised in the rotating part of the mechanical seal,

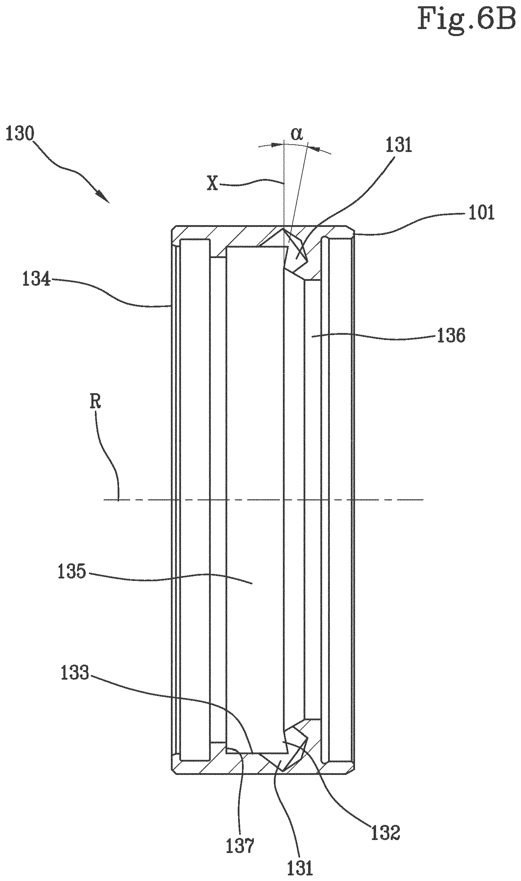

- figure 6B shows a sectional view according to track VI-VI in figure 7 of a preferred embodiment of the sealing element comprised in the rotating part of the mechanical seal;
- figure 7 shows a front view of the sealing element,
- figure 8 shows a sectional view of the sealing element according to track VIII-VIII in figure 7,

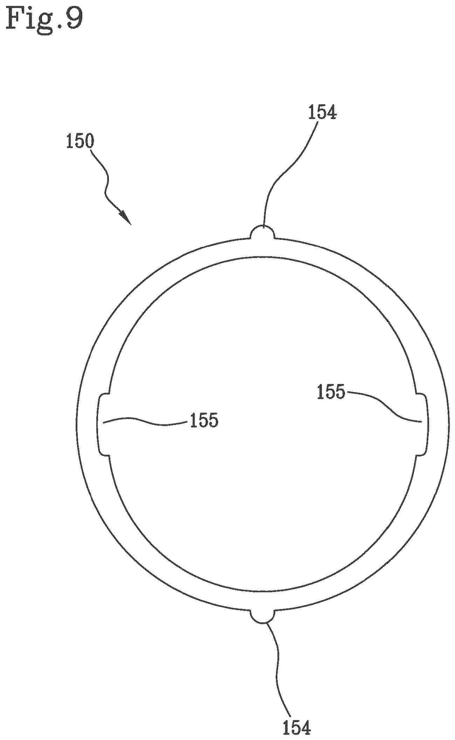

- figure 9 shows a front view of elastic means comprised in the rotating part and interposed between the annular body and the sealing element,

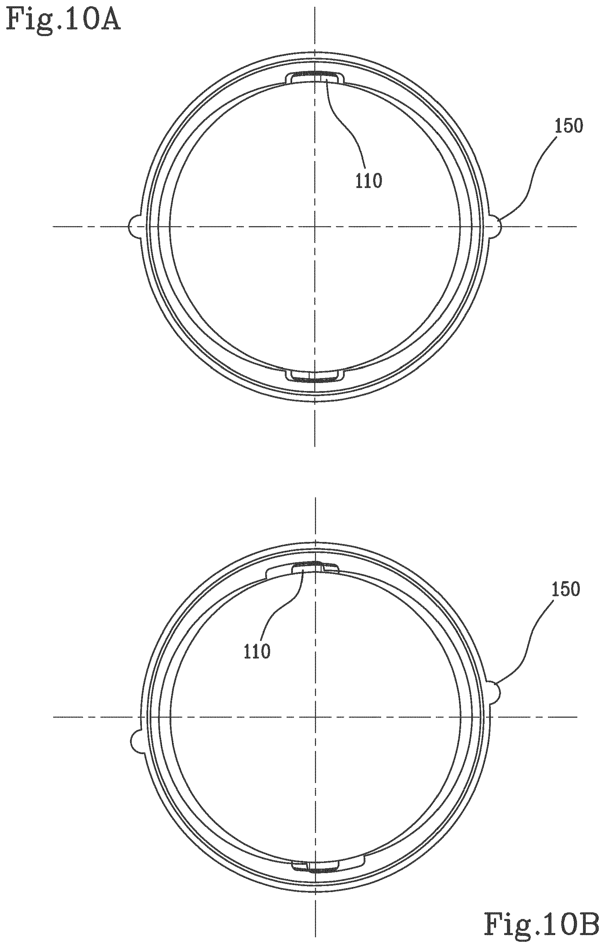

- figure 10A and figure 10B show a front view of the shape coupling between elastic means and annular body respectively in two different operating conditions.

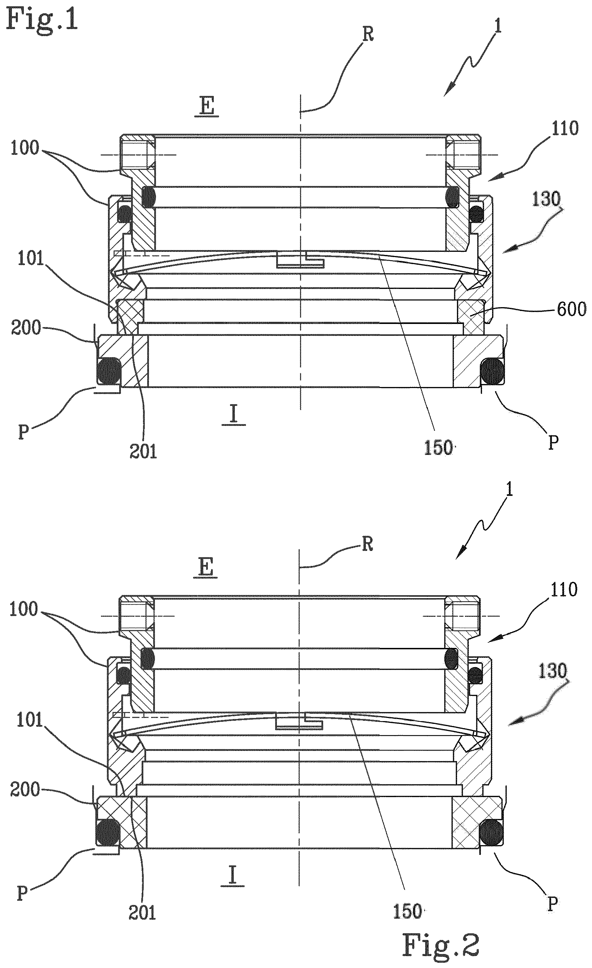

With reference to figures 1 and 2, a mechanical seal is referred to generically with the numerical reference 1 and will be referred to hereafter with the notation "mechanical seal 1".

The mechanical seal 1 is applicable to a fixed wall "P" and a non-illustrated rotatable shaft passing through an opening in the wall "P", so as to generate a fluid seal through that opening, in particular to isolate a first side of the wall "P" from a fluid present at an opposite second side thereof. The wall "P" forms, for example, part of the hull of a boat and the rotating shaft passes through an opening in it to transmit motion from the engine, located on board the boat, to the propeller, located outside the hull. In this type of application, the mechanical seal 1 isolates the inside of the hull from the water on the outside of the hull.

In the context of this description, the outer side "E" is indicated as the side of the mechanical seal 1 exposed to the fluid to be contained, and the inner side "I" as the side opposite the outer side "E".

The mechanical seal 1 comprises a rotating part 100 and a fixed part 200. The rotating part 100 is connected integrally to the rotating shaft via a first fluid-tight coupling and the fixed part 200 is integrally connectable to the wall "P" via a second fluid-tight coupling.

The rotating part 100 and the fixed part 200 have respective coupling surfaces, in particular a rotating coupling surface 101 and a fixed coupling surface 201, which are arranged in abutment and pressed against each other so as to slide mutually during the rotation of the rotating shaft and generate a fluid seal.

The rotating part 100 comprises an annular body 110 and a sealing element 130 essentially coaxial to the annular body 110.

The annular body 110 can be integrally connected to the rotating shaft and rotates together with it around a rotation axis "R".

The annular body 110, illustrated in figures 4A, 4 and 5, is preferably a substantially bushed body extending around the rotation axis "R".

The annular body has a side surface "SP" proximal to the rotation axis "R", a side surface "SD" distal to the rotation axis "R" and two annular head surfaces "ST", one external, exposed to the fluid to be contained, and one internal, its opposite. In particular, the head surfaces ST extend around the rotation axis R.

The annular body 110 has at least one tooth 115, preferably two and diametrically opposed. In particular, the tooth 115 extends axially and away from the respective annular head surface "ST" of the annular body 110.

Preferably, the tooth 115 has a radial thickness less than a radial thickness of the annular head surface "ST" from which it extends. Even more preferably, the tooth 115 is arranged proximal to the rotation axis "R".

Advantageously, the tooth 115 has at least one appendage 115a extending in a circumferential direction with respect to the rotation axis "R", defining a circumferential housing 115b. More specifically, the appendage 115b appears to be positioned distally with respect to an annular head surface "ST".

Conveniently, the tooth 115 has a lower axial extension than the axial extension of the sealing element 130.

In addition, the annular body 110 preferably has an abutment shoulder 116 formed on its distal side surface "SD" and adjacent to the outer portion of the mechanical seal.

The sealing element 130, illustrated in figures 6A, 6B, 7 and 8, has a central cavity "C" adapted to accommodate the rotating shaft and the annular body 110 integral with it.

The sealing element 130 comprises the rotating coupling surface 101 described above and is coupled to the annular body 110 so as to be movable with respect to it (and with respect to the rotating shaft) along the rotation axis "R". It is thus possible to maintain contact of the rotating coupling surfaces 101 and static coupling surfaces 201 following a translation of the rotating shaft and the annular body 110 connected thereto.

Preferably, the sealing element 130 has a cylindrical mouth 134 for access to the central cavity "C" and the side surface "SD" distal to the rotation axis R of the annular body 110 is slidably inserted into this mouth 134. The annular body 110 is free to slide within the sealing element 130 until it abuts against the latter at the abutment shoulder 116.

Moreover, the sealing element 130 preferably has a channel 136, in communication with the mouth 134, defining a portion of the cavity "C" having a smaller diameter than the mouth 134 and preferably dimensioned so as to allow a fluid-tight coupling with the rotating shaft.

Preferably, the sealing element 130 has an inner annular groove 135 facing the rotation axis "R" and preferably interposed between the mouth 134 and the channel 136.

Preferably, the annular groove 135 has a larger diameter than the mouth 134 and the channel 136, so as to define an annular surface 133 extending around the rotation axis "R", a hitting shoulder 132 extending normal to the rotation axis "R" and arranged between the annular surface 133 and the channel 136 and, preferably, a containment shoulder 137 arranged between the annular surface 133 and the mouth 134.

The sealing element 130 also has at least one external recess 131, preferably two and diametrically opposed.

In the preferred embodiment, illustrated in figures 6A and 6B, the outer recesses 131 are partially obtained at the hitting shoulder 132 and the annular surface 133, these recesses are also inclined in relation to the hitting shoulder 132.

The mechanical seal 1 further comprises elastic means active between the annular body 110 and the sealing element 130 to keep the rotating coupling surface 101 pressed against the static coupling surface 201.

These elastic means are also configured to allow a mutual position adjustment along the rotation axis "R" between the annular body 110 and the sealing element 130, for example as a result of translational movements of the rotatable shaft along the rotation axis "R" with respect to the wall "P".

Advantageously, the elastic means comprise a wave spring 150 illustrated in figure 9 with a substantially annular, preferably two-wave, closed annular shape.

The wave spring 150 is preferably housed in the sealing element 130, even more preferably in the annular groove 135, and has an outer profile, thus distal from the rotation axis "R", substantially countershaped to the annular surface 133. Preferably, the wave spring 150 has an inner diameter at least coincident with the diameter of the containment shoulder 137 and the mouth 134 so as to protrude with respect to them towards the rotation axis "R".

Preferably, the containment shoulders 137 and hitting shoulders 132 are configured to engage the wave spring 150 in a fully extended configuration to define a maximum, or limit stop, extension along the rotation axis "R" coincident with the width of the annular groove 135. In the preferred embodiment, the width of the annular groove 135 is less than the axial extension of the wave spring 150 in the unloaded configuration, resulting in pre-compression.

In addition, in the preferred embodiment shown in figure 6B, the hitting shoulder 132 has an inclination of less than 90°, preferably equal to 80°, to the rotation axis "R", as can be seen in figure 9b. In other words, the hitting shoulder 132 is inclined with respect to a plane X, orthogonal to the rotation axis "R", by an angle α comprised between 5° and 15°, preferably 10°.

Advantageously, the aforementioned technical feature promotes lower stress on the wave spring 150, thus allowing for a longer service life thereof.

Even more advantageously, the aforementioned inclination of the hitting shoulder 132 avoids edge contact between the spring 150 and the shoulder 132 itself, thus limiting possible notching and wear of the sealing element 130.

The wave spring 150 has at least one axially pass-through recess 155 formed in a portion of the wave spring 150 facing the rotation axis "R", the recess 155 also being open towards the rotation axis "R". Preferably, the wave spring 150 has a recess 155 for each of its waves; even more preferably, there are two such recesses, square in shape and diametrically opposed. Advantageously, each recess 155 is obtained along an inner perimeter edge of the wave spring 150.

The wave spring 150 also has at least one outer tooth 154, preferably one for each wave of the wave spring 150, protruding away from the rotation axis "R". Preferably, this outer tooth 154 has a curvilinear profile.

Advantageously, each outer tooth 154 is made along an outer perimeter edge of the wave spring 150.

In the preferred embodiment illustrated in figure 9, the wave spring 150 has two inner recesses 155, diametrically opposite the centre of extension of the wave spring 150, and two outer teeth 154, also diametrically opposite the centre of extension of the wave spring 150 and angularly spaced 90° apart from the inner recesses 155.

Considering the rotating part 100 in its entirety, the wave spring 150 has respective and opposite ends, coinciding with ridges and depressions of its wave profile, arranged in abutment against an annular head surface "ST" of the annular body 110 and the hitting shoulder 132 of the sealing element 130. In other words, the wave spring 150 is interposed between an annular head surface "ST" of the annular body 110 and the hitting shoulder 132 of the sealing element 130: the wave spring 150 is therefore arranged to be pressed against them to be compressed during a mutual approach of the annular body 110 and the sealing element 130 along the rotation axis "R".

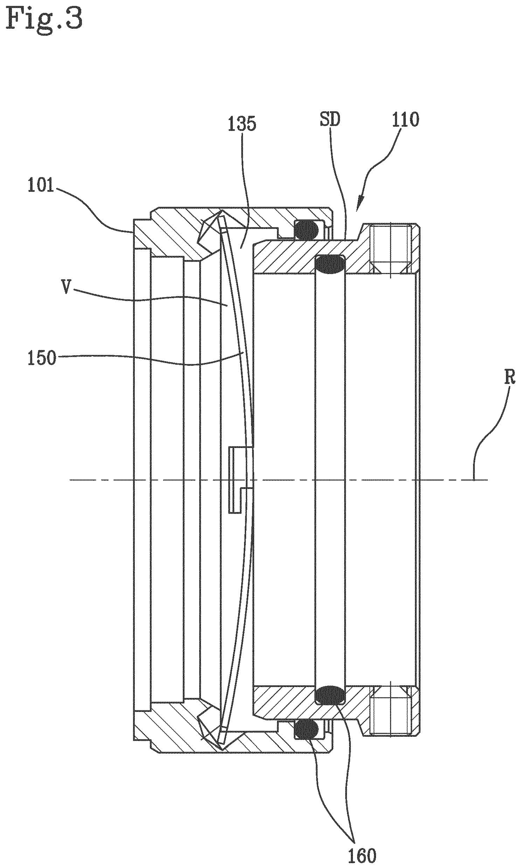

Even more preferably, as shown in figure 3, the annular body 110 is coupled to the sealing element 130 so that the distal side surface "SD" faces the annular groove 135 to define, in cooperation therewith, an at least partially closed housing volume "V" for the wave spring 150. Advantageously, the rotating part 100 comprises sealing means 160, e.g. one or more O-rings, interposed between the annular body 110 and the sealing element 130 to seal the housing volume "V" of the wave spring 150 at least with respect to the fluid present on the outer side "E" to the mechanical seal 1.

Advantageously, the wave spring 150 has a first rotationally-shaped coupling with the annular body 110 configured to rotationally constrain the wave spring 150 to the annular body 110 around the rotation axis "R". Specifically, this coupling is achieved by axially inserting a tooth 115 of the annular body 110 into a recess 155 of the wave spring 150. In other words, a tooth 115 is configured to fit axially into a recess 155 in order to define this first rotationally-shaped coupling.

This first rotationally-shaped coupling is capable of transferring the rotation of the annular body 110, imposed by the rotating shaft, to the sealing element 130. In other words, the sealing element 130 is only rotationally constrained to the annular body 110 by the wave spring 150.

Advantageously, the wave spring 150 has a second rotationally-shaped coupling with the sealing element 130 configured to rotationally constrain the sealing element 130 to the wave spring 150 around the rotation axis "R". Specifically, such a second rotationally-shaped coupling results in the insertion of an outer tooth 154 of the wave spring 150 into an outer recess 131 of the sealing element 130. In other words, an outer tooth 154 is configured to engage an outer recess 131 in order to define such a second rotationally-shaped coupling.

Even more advantageously, an outer recess 131 has a greater depth than the radial extension of an outer tooth 154. In other words, the wave spring 150, instead of resting with one end of the outer tooth 154 inside the cavity defined by the outer recesses 131, rests at the level of the hitting shoulder 132. Consequently, the wave spring 150 rests on the hitting shoulder 132 with an area adjacent to at least one outer tooth 154, the latter thus remaining free from mechanical stress. When the spring 150 is in a deformed configuration, i.e. when the annular body 110 and the sealing element 130 are in close proximity along the rotation axis "R", this feature is convenient allowing the definition of a support surface between the wave spring 150 and the sealing element 130 coinciding with an area of the wave spring 150 adjacent to an outer tooth 154 and varying with the degree of compression of the wave spring 150. In this way, it is possible to achieve a distribution of the forces generated by the wave spring 150 that is uniform and promotes homogeneous wear at the rotating coupling surface 101 between the rotating and stationary parts.

Advantageously, the first rotationally-shaped coupling results in a rotational constraint between the annular body 110 and the spring 150 which, being constrained to the sealing element 130 by the second rotationally-shaped coupling, results in a rotational constraint between the annular body 110 and the sealing element 130. In other words, thanks to the interposition of the wave spring 150 between the annular body 110 and the sealing element 130, these are both constrained to rotate about the rotation axis "R" integrally with the rotating shaft.

Furthermore, thanks to the interposition of the wave spring 150 between the annular body 110 and the sealing element 130, they can move mutually along the rotation axis "R", however counteracted by the axial action of the wave spring 150.

The wave spring 150 also has an axially-shaped coupling with the annular body 110, which is configured to axially constrain the wave spring 150 and the annular body 110 so as to prevent them from detaching from each other along the rotation axis "R". More specifically, this axially-shaped coupling is configured to be reversibly activated upon relative rotation between the wave spring 150 and the annular body 110. For explanatory purposes, figures 10A and 10B show the sequence whereby, in a possible embodiment, the axial constraint between wave spring 150 and annular body 110 is achieved by keeping the annular body 110 stationary and rotating the sealing element, in which the spring is inserted, clockwise, or vice versa. The housing 115b is configured to engage the wave spring 150 in a portion thereof adjacent to a recess 155 as a result of relative rotation between the wave spring 150 and the annular body 110. More specifically, following a relative rotation between the wave spring 150 and the annular body 110, the appendage 115a is able to oppose the mutual axial detachment between the wave spring 150 and the annular body 130. In other words, the housing 115b is configured to define a bayonet coupling with the area adjacent to the recesses 155 formed in the wave spring 150. In a further embodiment not illustrated, the annular body 110 has at least one internal recess, preferably two, running through one of its cylindrical walls in a radial direction with respect to the rotation axis "R". Preferably, an inner recess extends parallel to the rotation axis "R". This inner recess has at least one appendage proximal to the median portion of the annular body 110 and defining a circumferential housing.

In such a configuration, the wave spring 150 has at least one internal tooth, preferably one for each wave defined by the wave spring 150, protruding towards the rotation axis "R" and configured to engage a respective internal recess of the annular body 110 to define the first rotationally-shaped coupling between the wave spring 150 and the annular body 110. At the same time, the appendage is configured to realise the axially-shaped coupling between wave spring 150 and annular body 110 as a result of relative rotation between wave spring 150 and annular body 110. In other words, an appendage formed in a recess of the annular body 110 is adapted to oppose the mutual detachment between the wave spring 150 and the annular body 110.

In terms of construction materials, a first traditional embodiment, shown in figure 1, includes an annular body 110 and a sealing element 130 both made of AISI 316, a particularly corrosion-resistant steel, while the stationary body is made of silicon carbide. This first traditional embodiment also includes a sealed graphite insert 600 on the sealing element 130 of the rotating part 100 to accommodate the front coupling between the rotating part 100 and the stationary part 200. In other words, the front coupling between the rotating part 100 and the stationary body 200 occurs between the graphite insert 600 of the sealing element 130 and the silicon carbide of the stationary body 200.

A second innovative embodiment implemented through the configuration of the mechanical seal 1 described herein is shown in figure 2. This second innovative embodiment includes an annular body 110 and a sealing element 130 made entirely of chromium steel (Y1), while the stationary body is made of graphite. This would result in an integral sealing element 130 as shown in figure 2. An integral sealing element is defined as a sealing element without a graphite or silicon insert and preferably made of chromium steel. This type of sealing element, being composed of only one piece, is environmentally friendly.

The present invention achieves the proposed aim, overcoming the drawbacks complained of in the prior art.

Advantageously, the shape of the wave spring 150 and its coupling, with the annular body 110 and the sealing element 130, in particular the first and second rotationally-shaped couplings described here allow for mutual rotational drive between the two elements.

In addition, the reversible axial constraint between annular body 110 and wave spring 150 ensures versatile mounting for the operator. Even more advantageously, the curved profile of the outer teeth 154 of the spring 150 aids the operator during assembly, preventing any injuries caused by sharp edges.

Conveniently, the conformation of the coupling between the outer recesses 131 in the sealing element 130 and the outer teeth 154 of the wave spring 150 allows an even distribution of the forces generated by the wave spring 150 and transmitted to the frontal coupling area between the rotating and stationary bodies. More specifically, the spring 150, resting on the hitting shoulder 132 in an area adjacent to its outer teeth 154, generates a uniform distribution of forces that promotes homogeneous wear at the front coupling surface between the rotating and stationary parts. In addition, this allows the support surface of the wave spring 150 to vary consistently with the compression of the wave spring 150.

The main purpose achieved by means of the mechanical seal 1 described herein relates to the cost-effectiveness of the product as this mechanical seal 1 can be realised by means of a production process capable of minimising material waste, in particular by introducing teeth 115 at the level of the annular body 110. These teeth have a limited axial extension and less than the axial extension of the sealing element 130. In addition, the mechanical seal 1 described here brings cost-effectiveness to the production process by not requiring an ion nitriding step to make its components stronger.

Finally, the mechanical seal 1 described here, comprising an annular body 110 and a sealing element 130 made entirely of a single material, is environmentally sustainable. In particular, the absence of the graphitic insert 600 means a saving in terms of pollution caused by the sealing material of the graphitic insert 600.

## Claims

1. Mechanical seal (1), comprising a rotating part (100) connectable to a rotating shaft and a fixed part (200) connectable to a fixed wall (P); said rotating part (100) comprising:
- an annular body (110) integrally connectable to a rotating shaft (A) about a rotation axis (R);
- a sealing element (130) substantially coaxial with said annular body (110) and having a rotating coupling surface (101) configured to abut against a respective static coupling surface (201) of said fixed part (200); and
- elastic means comprising a wave spring (150) having a substantially annular profile, said elastic means being active between said annular body (110) and said sealing element (130) to maintain said rotating coupling surface (101) pressed against said static coupling surface (201) and to allow a mutual position adjustment along said rotation axis (R) between the annular body (110) and the sealing element (130);
- a first rotationally-shaped coupling configured to rotationally constrain said wave spring (150) to said annular body (110) about said rotation axis (R) and a second rotationally-shaped coupling configured to rotationally constrain said sealing element (130) to said wave spring (150) about said rotation axis (R),
**characterized in that**
said wave spring (150) has at least one axially pass-through recess (155), preferably one for each wave defined by said wave spring (150), and **in that** said annular body (110) has at least one tooth (115), preferably one for each wave defined by said wave spring (150), wherein said tooth (115) extends axially away from an annular head surface (ST) of said annular body (110) developed about said rotation axis (R), said tooth (115) being configured to axially fit into said recess (155) so as to define said first rotationally-shaped coupling.

2. Mechanical seal (1) according to claim 1, wherein said recess (155) is obtained along an inner perimeter edge of said wave spring (150), in a portion of said wave spring (150) facing said rotation axis (R) and is open towards said rotation axis (R).

3. Mechanical seal (1) according to one or more of the preceding claims, comprising an axially-shaped coupling configured to axially constrain said wave spring (150) and said annular body (110) so as to prevent them from disengaging from each other along said rotation axis (R), wherein said axially-shaped coupling is configured to be reversibly activated upon relative rotation between said wave spring (150) and said annular body (110).

4. Mechanical seal (1) according to claim 3, wherein said tooth (115) is configured to implement said axially-shaped coupling preferably having at least one appendage (115a) extending in a circumferential direction with respect to said rotation axis (R), said appendage (115a) defining a circumferential housing (115b) configured to engage said wave spring (150) in a portion thereof adjacent to said recess (155) following a relative rotation between said wave spring (150) and said annular body (110) so that said appendage (115a) opposes the disengagement of said wave spring (150) and said annular body (110) from each other.

5. Mechanical seal (1) according to any one or more of the preceding claims, wherein said tooth (115) has a radial thickness lower than a radial thickness of the head annular surface (ST) of said annular body (110), said tooth (115) being preferably arranged proximal to said rotation axis (R).

6. Mechanical seal (1) according to one or more of the preceding claims, wherein said sealing element (130) is rotationally constrained to said annular body (110) only by means of said wave spring (150).

7. Mechanical seal (1) according to one or more of the preceding claims, wherein said sealing element (130) has at least one outer recess (131), preferably one for each wave of said wave spring (150), and wherein said wave spring (150) has at least one outer tooth (154), preferably one for each wave of said wave spring (150), protruding away from said rotation axis (R) and configured to engage said outer recess (131) to define said second rotationally-shaped coupling.

8. Mechanical seal (1) according to claim 7, wherein said outer recess (131) has a depth greater than the radial extension of said outer tooth (154).

9. Mechanical seal (1) according to claim 7 or 8, in which said outer tooth (154) has a curvilinear profile.

10. Mechanical seal (1) according to one or more of the preceding claims, wherein said sealing element (130) has a hitting shoulder (132) configured to abut against respective ends of said wave spring (150), said outer recess (131) being partially obtained at the hitting shoulder (132) and partially at an annular surface (133) adjacent to the hitting shoulder (132) and inclined with respect to said hitting shoulder (132).

11. Mechanical seal (1) according to one or more of the preceding claims, wherein said sealing element (130) has a substantially cylindrical mouth (134), said annular body (110) having a side surface (SD) distal from said axis rotation (R) slidably engaged in said mouth (134), wherein said tooth (115) is proximal to said rotation axis (R) and said annular head surface (ST) of said annular body (110) is configured to abut against respective ends of said wave spring (150).

12. Mechanical seal (1) according to one or more of the preceding claims, wherein said sealing element (130) has an inner annular groove (135) facing said rotation axis (R) and configured to house said wave spring (150), preferably said annular groove (135) having an axial dimension measured parallel to said rotation axis (R), equal to or smaller than a maximum axial dimension of the wave spring (150) in an unloaded condition and wherein said tooth (115) has an axial dimension smaller than the axial dimension of said annular groove (135).

13. Mechanical seal (1) according to claim 12 wherein said annular groove is defined between said containment shoulder (137) and a hitting shoulder (132); said hitting shoulder (132) being inclined with respect to a plane (X) orthogonal to said rotation axis (R) by an angle of between 5° and 15°, preferably equal to 10°, said wave spring engaging within said annular groove.

14. Mechanical seal (1) according to claims 11 and 12, wherein said side surface distal from said rotation axis (R) of said annular body (110) is facing said annular groove (135) to define an at least partially closed housing volume (V) for said wave spring (150), said rotating part (100) comprising sealing means (160) interposed between said annular body (110) and said sealing element (130) to seal said housing volume (V).

15. Mechanical seal (1) according to one or more of the preceding claims, wherein said rotating part (100) comprises said annular body (110) and said sealing element (130) made entirely of a same material, preferably chromium steel Y1.

16. Mechanical seal (1) according to one or more of the preceding claims, wherein said sealing element (130) is made of AISI 316 steel and includes an annular insert defining said rotating coupling surface (101) made of graphite.

## Patentansprüche

1. Gleitringdichtung (1), umfassend einen rotierenden Teil (100), der mit einer rotierenden Welle verbunden werden kann, und einen festen Teil (200), der mit einer festen Wand (P) verbunden werden kann; wobei der rotierende Teil (100) Folgendes umfasst:
- einen ringförmigen Körper (110), der um eine Drehachse (R) fest mit einer rotierenden Welle (A) verbunden werden kann;
- ein Dichtungselement (130), das im Wesentlichen koaxial zu dem genannten ringförmigen Körper (110) ist und eine rotierende Kupplungsfläche (101) aufweist, die darauf ausgelegt ist, an einer entsprechenden statischen Kupplungsfläche (201) des genannten festen Teils (200) anzuliegen; und
- elastische Mittel, die eine Wellenfeder (150) mit einem im Wesentlichen ringförmigen Profil umfassen, wobei die genannten elastischen Mittel zwischen dem genannten ringförmigen Körper (110) und dem genannten Dichtungselement (130) wirken, um die genannte rotierende Kupplungsfläche (101) gegen die genannte statische Kupplungsfläche (201) gedrückt zu halten und eine gegenseitige Positionsanpassung entlang der genannten Drehachse (R) zwischen dem ringförmigen Körper (110) und dem Dichtungselement (130) zu ermöglichen;
- eine erste drehbar geformte Kupplung, die darauf ausgelegt ist, die genannte Wellenfeder (150) um die genannte Drehachse (R) drehbar an dem genannten ringförmigen Körper (110) zu halten, und eine zweite drehbar geformte Kupplung, die darauf ausgelegt ist, das genannte Dichtungselement (130) um die genannte Drehachse (R) drehbar an der genannten Wellenfeder (150) zu halten,
**dadurch gekennzeichnet, dass**
die genannte Wellenfeder (150) mindestens eine axial durchgehende Aussparung (155) aufweist, vorzugsweise eine für jede von der genannten Wellenfeder (150) definierte Welle, und dass der genannte ringförmige Körper (110) mindestens einen Zahn (115) aufweist, vorzugsweise einen für jede von der genannten Wellenfeder (150) definierte Welle, wobei der genannte Zahn (115) axial von einer ringförmigen Kopffläche (ST) des genannten ringförmigen Körpers (110) weg verläuft, die um die genannte Drehachse (R) verläuft, wobei der genannte Zahn (115) darauf ausgelegt ist, axial in die genannte Aussparung (155) zu passen, um die genannte erste drehbar geformte Kupplung zu definieren.

2. Gleitringdichtung (1) nach Anspruch 1, wobei die genannte Aussparung (155) entlang einer inneren Umfangskante der genannten Wellenfeder (150) in einem Abschnitt der genannten Wellenfeder (150) erhalten wird, der der genannten Drehachse (R) gegenüberliegt und in Richtung der genannten Drehachse (R) offen ist.

3. Gleitringdichtung (1) nach einem oder mehreren der vorangegangenen Ansprüche, umfassend eine axial geformte Kupplung, die darauf ausgelegt ist, die genannte Wellenfeder (150) und den genannten ringförmigen Körper (110) axial zu halten, um zu vermeiden, dass sie sich entlang der genannten Drehachse (R) voneinander lösen, wobei die genannte axial geformte Kupplung darauf ausgelegt ist, bei einer relativen Drehung zwischen der genannten Wellenfeder (150) und dem genannten ringförmigen Körper (110) reversibel aktiviert zu werden.

4. Gleitringdichtung (1) nach Anspruch 3, wobei der genannte Zahn (115) darauf ausgelegt ist, die genannte axial geformte Kupplung zu implementieren, die vorzugsweise mindestens einen Ansatz (115a) aufweist, der in einer Umfangsrichtung im Verhältnis zu der genannten Drehachse (R) verläuft, wobei der genannte Ansatz (115a) ein Umfangsgehäuse (115b) definiert, das darauf ausgelegt ist, im Anschluss an eine relative Drehung zwischen der genannten Wellenfeder (150) und dem genannten ringförmigen Körper (110) mit der genannten Wellenfeder (150) in einem an die genannte Aussparung (155) angrenzenden Abschnitt davon in Eingriff zu gelangen, so dass der genannte Ansatz (115a) dem Lösen der genannten Wellenfeder (150) und des genannten ringförmigen Körpers (110) voneinander entgegenwirkt.

5. Gleitringdichtung (1) nach einem oder mehreren der vorangegangenen Ansprüche, wobei der genannte Zahn (115) eine geringere radiale Stärke als eine radiale Stärke der ringförmigen Kopffläche (ST) des genannten ringförmigen Körpers (110) aufweist, wobei der genannte Zahn (115) vorzugsweise proximal zu der genannten Drehachse (R) angeordnet ist.

6. Gleitringdichtung (1) nach einem oder mehreren der vorangegangenen Ansprüche, wobei das genannte Dichtungselement (130) nur mittels der genannten Wellenfeder (150) drehbar an dem genannten ringförmigen Körper (110) gehalten wird.

7. Gleitringdichtung (1) nach einem oder mehreren der vorangegangenen Ansprüche, wobei das genannte Dichtungselement (130) mindestens eine äußere Aussparung (131), vorzugsweise eine für jede Welle der genannten Wellenfeder (150), aufweist, und wobei die genannte Wellenfeder (150) mindestens einen äußeren Zahn (154), vorzugsweise einen für jede Welle der genannten Wellenfeder (150), aufweist, der von der genannten Drehachse (R) vorsteht und darauf ausgelegt ist, in die genannte äußere Aussparung (131) einzugreifen, um die genannte zweite drehbar geformte Kupplung zu definieren.

8. Gleitringdichtung (1) nach Anspruch 7, wobei die genannte äußere Aussparung (131) eine größere Tiefe als die radiale Erstreckung des genannten äußeren Zahns (154) aufweist.

9. Gleitringdichtung (1) nach Anspruch 7 oder 8, bei der der genannte äußere Zahn (154) ein kurvenförmiges Profil aufweist.

10. Gleitringdichtung (1) nach einem oder mehreren der vorangegangenen Ansprüche, wobei das genannte Dichtungselement (130) eine Anschlagschulter (132) aufweist, die darauf ausgelegt ist, an jeweiligen Enden der genannten Wellenfeder (150) anzuschlagen, wobei die genannte äußere Aussparung (131) teilweise an der Anschlagschulter (132) und teilweise an einer ringförmigen Oberfläche (133) erhalten wird, die an die Anschlagschulter (132) angrenzt und im Verhältnis zu der genannten Anschlagschulter (132) geneigt ist.

11. Gleitringdichtung (1) nach einem oder mehreren der vorangegangenen Ansprüche, wobei das genannte Dichtungselement (130) eine im Wesentlichen zylindrische Mündung (134) aufweist, wobei der genannte ringförmige Körper (110) eine von der genannten Drehachse (R) distale Seitenfläche (SD) aufweist, die sich verschiebbar in der genannten Mündung (134) im Eingriff befindet, wobei der genannte Zahn (115) proximal zu der genannten Drehachse (R) ist und die genannte ringförmige Kopffläche (ST) des genannten ringförmigen Körpers (110) darauf ausgelegt ist, an jeweiligen Enden der genannten Wellenfeder (150) anzuschlagen.

12. Gleitringdichtung (1) nach einem oder mehreren der vorangegangenen Ansprüche, wobei das genannte Dichtungselement (130) eine innere ringförmige Nut (135) aufweist, die der genannten Drehachse (R) gegenüberliegt und darauf ausgelegt ist, die genannte Wellenfeder (150) aufzunehmen, wobei die genannte ringförmige Nut (135), vorzugsweise eine axiale, parallel zu der genannten Drehachse (R) gemessene Abmessung aufweist, die einer maximalen axialen Abmessung der Wellenfeder (150) in einem unbelasteten Zustand entspricht oder kleiner ist, und wobei der genannte Zahn (115) eine kleinere axiale Abmessung als die axiale Abmessung der genannten ringförmigen Nut (135) aufweist.

13. Gleitringdichtung (1) nach Anspruch 12, wobei die genannte ringförmige Nut zwischen der genannten Eingrenzungsschulter (137) und einer Anschlagschulter (132) definiert ist; wobei die genannte Anschlagschulter (132) im Verhältnis zu einer Ebene (X) senkrecht zu der genannten Drehachse (R) um einen Winkel zwischen 5° und 15°, vorzugsweise von 10°, geneigt ist und die genannte Wellenfeder in die genannte ringförmige Nut eingreift.

14. Gleitringdichtung (1) nach den Ansprüchen 11 und 12, wobei die genannte zu der genannten Drehachse (R) des genannten ringförmigen Körpers (110) distale Seitenfläche der genannten ringförmigen Nut (135) gegenüberliegt, um ein mindestens teilweise geschlossenes Gehäusevolumen (V) für die genannte Wellenfeder (150) zu definieren, wobei der genannte rotierende Teil (100) Dichtungsmittel (160) umfasst, die zwischen dem genannten ringförmigen Körper (110) und dem genannten Dichtungselement (130) liegen, um das genannte Gehäusevolumen (V) abzudichten.

15. Gleitringdichtung (1) nach einem oder mehreren der vorangegangenen Ansprüche, wobei der genannte rotierende Teil (100) den genannten ringförmigen Körper (110) und das genannte Dichtungselement (130) umfasst, die vollständig aus demselben Material, vorzugsweise Chromstahl Y1, hergestellt sind.

16. Gleitringdichtung (1) nach einem oder mehreren der vorangegangenen Ansprüche, wobei das genannte Dichtungselement (130) aus AISI 316-Stahl besteht und einen ringförmigen Einsatz enthält, der die genannte rotierende Kupplungsfläche (101) aus Graphit definiert.

## Revendications

1. Joint mécanique (1), comprenant une partie rotative (100) pouvant être reliée à un arbre rotatif et une partie fixe (200) pouvant être reliée à une paroi fixe (P) ; ladite partie rotative (100) comprenant :
- un corps annulaire (110) pouvant être relié intégralement à un arbre rotatif (A) autour d'un axe de rotation (R) ;
- un élément d'étanchéité (130) sensiblement coaxial audit corps annulaire (110) et comportant une surface de couplage rotative (101) configurée pour venir en butée contre une surface de couplage statique respective (201) de ladite partie fixe (200) ; et
- des moyens élastiques comprenant un ressort ondulé (150) ayant un profil sensiblement annulaire, lesdits moyens élastiques étant actifs entre ledit corps annulaire (110) et ledit élément d'étanchéité (130) pour maintenir ladite surface de couplage rotative (101) pressée contre ladite surface de couplage statique (201) et pour permettre un ajustement de position mutuel le long dudit axe de rotation (R) entre le corps annulaire (110) et l'élément d'étanchéité (130) ;
- un premier couplage rotatif configuré pour contraindre en rotation ledit ressort ondulé (150) audit corps annulaire (110) autour dudit axe de rotation (R) et un second couplage rotatif configuré pour contraindre de manière rotative ledit élément d'étanchéité (130) audit ressort ondulé (150) autour dudit axe de rotation (R),
**caractérisé en ce que**
ledit ressort ondulé (150) présente au moins un évidement de passage axial (155), de préférence un pour chaque onde définie par ledit ressort ondulé (150), et **en ce que** ledit corps annulaire (110) présente au moins une dent (115), de préférence une pour chaque onde définie par ledit ressort ondulé (150), où ladite dent (115) s'étend axialement loin d'une surface de tête annulaire (ST) dudit corps annulaire (110) développé autour dudit axe de rotation (R), ladite dent (115) étant configurée pour s'insérer axialement dans ledit évidement (155) de manière à définir ledit premier couplage rotatif.

2. Joint mécanique (1) selon la revendication 1, où ledit évidement (155) est obtenu le long d'un bord périmétrique intérieur dudit ressort ondulé (150), dans une portion dudit ressort ondulé (150) orientée vers ledit axe de rotation (R), et est ouvert vers ledit axe de rotation (R).

3. Joint mécanique (1) selon l'une ou plusieurs des revendications précédentes, comprenant un couplage axial configuré pour contraindre axialement ledit ressort ondulé (150) et ledit corps annulaire (110) de manière à les empêcher de se désengager l'un de l'autre le long dudit axe de rotation (R), où ledit couplage axial est configuré pour être activé de manière réversible lors de la rotation relative entre ledit ressort ondulé (150) et ledit corps annulaire (110).

4. Joint mécanique (1) selon la revendication 3, où ladite dent (115) est configurée pour mettre en œuvre ledit couplage axial présentant de préférence ayant au moins un appendice (115a) s'étendant dans une direction circonférentielle par rapport audit axe de rotation (R), ledit appendice (115a) définissant un logement circonférentiel (115b) configuré pour engager ledit ressort ondulé (150) dans une portion de celui-ci adjacente audit évidement (155) suite à une rotation relative entre ledit ressort ondulé (150) et ledit corps annulaire (110) de sorte que ledit appendice (115a) s'oppose au désengagement mutuel dudit ressort ondulé (150) et dudit corps annulaire (110).

5. Joint mécanique (1) selon une quelconque ou plusieurs des revendications précédentes, où ladite dent (115) a une épaisseur radiale inférieure à une épaisseur radiale de la surface de tête annulaire (ST) dudit corps annulaire (110), ladite dent (115) étant de préférence agencée de façon proximale audit axe de rotation (R).

6. Joint mécanique (1) selon l'une ou plusieurs des revendications précédentes, où ledit élément d'étanchéité (130) est contraint en rotation audit corps annulaire (110) uniquement au moyen dudit ressort ondulé (150).

7. Joint mécanique (1) selon l'une ou plusieurs des revendications précédentes, où ledit élément d'étanchéité (130) présente au moins un évidement extérieur (131), de préférence un pour chaque onde dudit ressort ondulé (150), et où ledit ressort ondulé (150) présente au moins une dent extérieure (154), de préférence une pour chaque onde dudit ressort ondulé (150), faisant saillie loin dudit axe de rotation (R) et configurée pour engager ledit évidement extérieur (131) afin de définir ledit second couplage rotatif.

8. Joint mécanique (1) selon la revendication 7, où ledit évidement extérieur (131) a une profondeur supérieure à l'extension radiale de ladite dent extérieure (154).

9. Joint mécanique (1) selon la revendication 7 ou 8, dans lequel ladite dent extérieure (154) a un profil curviligne.

10. Joint mécanique (1) selon l'une ou plusieurs des revendications précédentes, où ledit élément d'étanchéité (130) présente un épaulement de frappe (132) configuré pour venir en butée contre les extrémités respectives dudit ressort ondulé (150), ledit évidement extérieur (131) étant obtenu en partie au niveau de l'épaulement de frappe (132) et en partie au niveau d'une surface annulaire (133) adjacente à l'épaulement de frappe (132) et inclinée par rapport audit épaulement de frappe (132).

11. Joint mécanique (1) selon l'une ou plusieurs des revendications précédentes, où ledit élément d'étanchéité (130) présente une embouchure sensiblement cylindrique (134), ledit corps annulaire (110) ayant une surface latérale (SD) distale par rapport audit axe de rotation (R) engagée de manière coulissante dans ladite embouchure (134), où ladite dent (115) est proximale audit axe de rotation (R) et ladite surface de tête annulaire (ST) dudit corps annulaire (110) est configurée pour venir en butée contre les extrémités respectives dudit ressort ondulé (150).

12. Joint mécanique (1) selon l'une ou plusieurs des revendications précédentes, où ledit élément d'étanchéité (130) présente une rainure annulaire intérieure (135) faisant face audit axe de rotation (R) et configurée pour loger ledit ressort ondulé (150), de préférence ladite rainure annulaire (135) ayant une dimension axiale, mesurée parallèlement audit axe de rotation (R), égale ou inférieure à une dimension axiale maximale du ressort ondulé (150) à l'état déchargé, et où ladite dent (115) présente une dimension axiale inférieure à la dimension axiale de ladite rainure annulaire (135).

13. Joint mécanique (1) selon la revendication 12, où ladite rainure annulaire est définie entre ledit épaulement de confinement (137) et un épaulement de frappe (132) ; ledit épaulement de frappe (132) étant incliné par rapport à un plan (X) orthogonal audit axe de rotation (R) d'un angle compris entre 5° et 15°, de préférence égal à 10°, ledit ressort ondulé s'engageant à l'intérieur de ladite rainure annulaire.

14. Joint mécanique (1) selon les revendications 11 et 12, où ladite surface latérale distale par rapport audit axe de rotation (R) dudit corps annulaire (110) fait face à ladite rainure annulaire (135) pour définir un volume de logement (V) au moins partiellement fermé pour ledit ressort ondulé (150), ladite partie rotative (100) comprenant des moyens d'étanchéité (160) interposés entre ledit corps annulaire (110) et ledit élément d'étanchéité (130) pour sceller de manière étanche ledit volume de logement (V).

15. Joint mécanique (1) selon l'une ou plusieurs des revendications précédentes, où ladite partie rotative (100) comprend ledit corps annulaire (110) et ledit élément d'étanchéité (130) réalisés entièrement dans un même matériau, de préférence en acier au chrome Y1.

16. Joint mécanique (1) selon l'une ou plusieurs des revendications précédentes, où ledit élément d'étanchéité (130) est en acier AISI 316 et comprend un insert annulaire définissant ladite surface de couplage rotatif (101) en graphite.
